# EUROPÄISCHE PATENTSCHRIFT

(11) **EP 2 913 162 B1**
(45) Veröffentlichungstag und Bekanntmachung des Hinweises auf die Patenterteilung: **23.09.2020**
(21) Anmeldenummer: 15156367.3
(22) Anmeldetag: 24.02.2015
(51) Int. Cl.: B25J 19/00

(54) **LEITUNGS-RÜCKZUGSYSTEM**
LINE RETRACTION SYSTEM
SYSTÈME DE RETOUR DE CONDUITE

(30) Priorität: 28.02.2014 DE 102014102698
(43) Veröffentlichungstag der Anmeldung: 02.09.2015
(73) Patentinhaber: Sumcab Specialcable GmbH, 74629 Pfedelbach (DE)
(72) Erfinder: Schütz, Lothar, 74243 Langenbrettach (DE)
(74) Vertreter: Herrmann, Jochen

(56) Entgegenhaltungen:
- DE-A1- 10 141 366
- DE-A1-102006 028 145
- US-A1- 2009 166 478

## Beschreibung

Die Erfindung betrifft ein Leitungs-Rückzugsystem für einen Industrieroboter zur Straffung zumindest einer entlang eines Roboterarms geführten Zuführungsanordnung, insbesondere eines Zuführungsschlauchs und/oder einer Zuführungsleitung und/oder eines Leitungspaketes, zum Längenausgleich in Folge einer Bewegung des Roboterarm, mit wenigstens einer Führungsstange und einem oder mehreren Rückstellelementen, wobei ein Haltesystem gegen die Federkraft des Rückstellelements verstellbar ist und wobei das Haltesystem zur Befestigung der Zuführungsanordnung ausgebildet ist.

Ein solches Leitungs-Rückzugsystem ist aus der EP 1 848 571 B1 bekannt. Die Schrift offenbart eine Leitungsführungseinrichtung zur Führung eines Schlauchpakets entlang eines insbesondere mehrachsigen Roboterarms eines Industrieroboters. Das Schlauchpaket enthält mehrere Einzelleitungen, über die eine am Ende des Roboterarms angeordnete Roboterhand und ein daran angeordnetes Werkzeug versorgt werden. Die Einzelleitungen sind üblicherweise von einem Schutzmantel umhüllt und bilden so das Schlauchpaket. Um Relativbewegungen zwischen den Armabschnitten des Roboterarms für das Schlauchpaket auszugleichen sieht die Schrift ein in Längsrichtung verschiebliches Befestigungselement vor, an dem das Schlauchpaket über eine Klemmschelle gehalten ist. Damit das Befestigungselement verschoben werden kann ist es fest mit einer Gleitstange verbunden, welche wiederum gegen die Rückstellkraft eines Rückstellelements gleitend in einem ortsfesten Gleitführungselement gelagert ist. Durch eine auf das Schlauchpaket ausgeübte Zugkraft wird das Befestigungselement mit der Gleitstange gegen die Federkraft des in dem gezeigten Ausführungsbeispiel als Druckfeder ausgelegten Rückstellelements verschoben. Lässt die Zugkraft nach, wird das Rückstellelement wieder zurückgezogen. Das Schlauchpaket bleibt somit immer gespannt und verfängt sich nicht an dem Roboterarm. In dem gezeigten Ausführungsbeispiel sind zwei Gleitstangen vorgesehen, welche in dem ortsfesten Gleitführungselement gleitend gelagert und endseitig mit dem Befestigungselement verbunden sind.

Nachteilig bei der offenbarten Leitungsführungseinrichtung ist, dass die Gleitstangen nur in einem vergleichsweise kurzen Teilabschnitt von dem Gleitführungselement gehalten sind. Insbesondere die ausgezogenen Gleitstangen bilden für seitlich auf das Befestigungselement einwirkende Kräfte einen großen Hebel. Solche auf das Befestigungselement, beispielsweise durch das Schlauchpaket, übertragene, seitlich wirkende Kräfte führen daher bei weit ausgezogenen Gleitstangen zu einer hohen Momentenbelastung des Gleitführungselements und der darin vorgesehenen Gleithülsen, was die Bewegung des Gleitstangen behindern und zu einem hohen Verschleiß der Gleithülsen führen kann. Weiterhin muss sichergestellt sein, dass die Verfahrwege der Gleitstangen und des Befestigungselements vor und hinter dem Gleitführungselement frei bleiben. Hier bietet der gezeigte Aufbau keine konstruktiven Maßnahmen, so dass diese gesondert anzubringen sind.

Aus der den nächstliegenden Stand der Technik bildenden US 2009/0166478 A1 ist ein weiteres Leitungs-Rückzugsystem der eingangs genannten Gattung bekannt, wobei dessen Haltesystem durch einen verstellbar auf der Führungsstange gelagerten Schlitten und einer auf diesem gehaltenen Leitungsschelle gebildet wird. Dieses bekannte Leitungs-Rückzugsystem entspricht somit dem Oberbegriff des Anspruchs 1.

Es ist Aufgabe der Erfindung, ein Leitungs-Rückzugsystem bereitzustellen, welches bei einfachem Aufbau eine stabile und sichere Führung einer Zuführungsanordnung ermöglicht.

Die Aufgabe der Erfindung wird durch ein Leitungs-Rückzugsystem gemäß Anspruch 1 gelöst.

Das Haltesystem kann durch eine entsprechende Krafteinwirkung durch die Zuführungsanordnung gegen die Rückstellkraft des Rückstellelements entlang der Führungsstange verstellt werden. Dadurch erfolgt ein Längenausgleich für die Zuführungsanordnung bei einer Relativbewegung der Roboterarme, wobei die Zuführungsanordnung gestrafft bleibt. Die Führungsstange ist vorteilhaft ortsfest gegenüber dem Roboterarm angeordnet. Von der Zuführungsanordnung übertragene Momente werden direkt auf das Haltesystem und den beweglichen Schlitten übertragen. Dabei wird das einwirkende Drehmoment nicht durch eine weit ausladende Führungsstange als Hebel verstärkt, wodurch eine beispielsweise zwischen dem Schlitten und der Führungsstange ausgebildete Gleitfläche nur wenig belastet wird. Weiterhin erfolgt die Bewegung des Halteelements nur in dem Bereich der Führungsstange, so dass sichergestellt ist, dass der Verfahrweg des Halteelements frei bleibt. Zusammenstöße bewegter Teile des Leitungs-Rückzugsystems mit Hindernissen, welche leicht zur Beschädigung des Leitungs-Rückzugsystems oder der befestigten Zuführungsanordnung führen können, können so vermieden werden. Ein weiterer Vorteil ergibt sich daraus, dass nur das Haltesystem und nicht zusätzlich die Führungsstangen bewegt werden. Dadurch wird die Masse der bewegten Bauteile und damit die Trägheit des Systems deutlich reduziert.

Entsprechend einer besonders bevorzugten Ausgestaltungsvariante der Erfindung kann es vorgesehen sein, dass das Leitungs-Rückzugsystem ein vorderes Halteelement und ein hinteres Halteelement aufweist, welche unmittelbar oder mittelbar mit einem Armabschnitt des Roboterarms ortsfest verbindbar sind, dass die zumindest eine Führungsstange auf einer Seite mit dem vorderen Halteelement und auf einer gegenüberliegenden Seite mit dem hinteren Halteelement verbunden ist und dass der in Längsrichtung der Führungsstange bewegliche Schlitten zwischen den Halteelementen gelagert ist. Die Führungsstange kann über die Halteelemente ortsfest an einen Armabschnitt des Roboterarms montiert werden. Dabei ist die Führungsstange vorteilhaft an zwei Seiten, insbesondere an ihren beiden Enden, in den Halteelementen gehalten, wodurch eine hohe Stabilität erreicht wird. Weiterhin sind die Führungsstange und damit der Verfahrweg des Haltesystems von den Halteelementen eingefasst. Durch eine Bewegung des Halteelementes werden keine beweglichen Bauteile des Leitungs-Rückzugsystems über die Halteelemente und damit die äußeren Abmessungen des Leitungs-Rückzugsystems hinaus bewegt. Damit ist konstruktiv erreicht, dass im Betrieb der Verfahrweg des Haltesystems freigehalten wird.

Eine einfache Befestigung der Zuführungsanordnung wird erfindungsgemäß dadurch erreicht, dass eine Leitungsschelle auf dem Schlitten gehalten ist und mit diesem das erste Haltesystem bildet. Die Zuführungsanordnung kann durch die Leitungsschelle klemmend mit dem Haltesystem verbunden werden. Dabei kann durch eine geeignete Auswahl der Leitungsschelle das Haltesystem an den Durchmesser der vorliegenden Zuführungsanordnung angepasst werden. Vorteilhaft ist daher die Leitungsschelle mit einer lösbaren Verbindung mit dem Schlitten verbunden.

Eine einfache, kostengünstige und dauerbeständige bewegliche Führung des Schlittens auf der Führungsstange kann dadurch erreicht werden, dass der Schlitten zumindest einen Längsdurchbruch mit einer darin eingelassenen Gleitbuchse aufweist und dass die zumindest eine Führungsstange durch die Gleitbuchse geführt ist. Der Schlitten und damit das Haltesystem können so leicht entlang der Führungsstange verschoben werden.

Ist es vorgesehen, dass an den Halteelementen eine Abdeckung montiert ist, welche das Leitungs-Rückzugsystem entlang der Führungsstange zum Roboterarm hin und/oder seitlich zumindest bereichsweise einhaust, kann verhindert werden, dass von der Seite des Roboterarms oder aus seitlicher Richtung Hindernisse in den Verfahrweg des Schlittens gelangen können. Weiterhin wird verhindert, dass Schmutz in den Bereich der Führungsstange gelangt und die Funktion des Leitungs-Rückzugsystems beeinträchtigt.

Eine kompakte Bauweise des Leitungs-Rückzugsystems kann dadurch erreicht werden, dass das Rückstellelement als Zug- oder Druckfeder ausgebildet ist und im Bereich zwischen zwei Führungsstangen angeordnet ist.

Erfindungsgemäß ist vorgesehen, dass die Leitungsschelle entlang zumindest eines Teils ihres Verfahrweges zumindest teilweise von einer Schutzhülle umfasst ist und dass die Schutzhülle zwei gegeneinander öffenbare Teilschalen aufweist. Durch die öffenbaren Teilschalen bleibt die Leitungsschelle zugängig, so dass die Zuführungsanordnung in die Leitungsschelle eingeführt und eingeklemmt werden kann. Die öffenbare Schutzhülle bietet somit auch die Möglichkeit, Zuführungsanordnungen mit endseitig montierten Steckern oder Kupplungen zu verbauen, deren Abmessungen größer als der Schutzhüllenquerschnitt ist. Zum Betrieb des Leitungs-Rückzugsystems werden die Teilschalen geschlossen, womit der Verfahrweg oder ein Teil des Verfahrwegs der Leitungsschelle umfasst ist. Die Leitungsschelle und ein Abschnitt der Zuführungsanordnung sind dann von der Schutzhülle eingehaust, wobei die Zuführungsanordnung durch stirnseitige Öffnungen aus der Schutzhülle geführt ist. Durch die Schutzhülle wird vermieden, dass Hindernisse und Schmutz in den Bereich des Verfahrwegs der Leitungsschelle gelangen können. Die Schutzhülle führt weiterhin die Zuführungsanordnung derart, dass diese der Leitungsschelle in Richtung des Verfahrwegs des Haltesystems zugeführt wird. Über die Zuführungsanordnung einwirkende Zugkräfte wirken dadurch entlang des Verfahrwegs auf das Haltesystem und können durch eine entsprechende Bewegung des Haltesystems entgegen der Rückstellkraft der Rückstellelemente ausgeglichen werden. Querkräfte mit resultierender seitlicher Auslenkung der Zuführungsanordnung werden durch die Schutzhülle abgefangen. Die Schutzhülle deckt weiterhin die von der Abdeckung offen gelassene Seite der Einhausung der Führungsstange und des darauf beweglich gelagerten Schlittens ab. Die beweglichen Teile des Leitungs-Rückzugsystems sind somit weitestgehend oder vollständig durch die Schutzhülle und die Abdeckung eingehaust, wodurch keine Hindernisse in die Verfahrwege eingebracht werden können und die beweglichen Teile vor Verschmutzung geschützt sind.

Ist es vorgesehen, dass die Teilschalen im Bereich einer Längsseite durch eine Scharnier- oder Gelenkverbindung miteinander gekoppelt sind und auf der der Scharnier- oder Gelenkverbindung gegenüberliegenden Längsseite durch einen Verschluss oder einen die Schutzhülle umfassenden Verschluss verschließbar sind, so können die Teilschalen zur Montage der Zuführungsanordnung leicht und wiederholt geöffnet und verschlossen werden. Durch die Scharnier- oder Gelenkverbindung ist sichergestellt, dass die Teilschalen passgenau zueinander ausgerichtet sind.

Eine einfache Herstellung der Schutzhülle kann dadurch erreicht werden, dass die Schutzhülle über zumindest ein die Teilschalen in einem Halteabschnitt umfassendes Verschlusselement verschließbar ist, wobei das Verschlusselement die Scharnier- oder Gelenkverbindung und den Verschluss bildet. Das Verschlusselement und die Teilschalen können so separat gefertigt werden. Dabei kann die Scharnier- oder Gelenkverbindung beispielsweise an das Verschlusselement angeformt werden. Das Verschlusselement wird derart um die Teilschalen gelegt, dass die Scharnier- oder Glenkverbindung an einer der Längsseiten der Teilschalen liegt und zumindest eine der Teilschalen zum Öffnen entlang der Längsseiten über die Scharnier- oder Gelenkverbindung geschwenkt werden kann.

Die Leitungsschelle wird erfindungsgemäß von der Schutzhülle umfasst, während der Schlitten und die Führungsstange außerhalb der Schutzhülle liegen. Um eine Verbindung zwischen dem Schlitten und der Leitungsschelle zu ermöglichen ist es vorgesehen, dass die Leitungsschelle über einen Schellenfuß mit dem Schlitten verbunden ist und dass die Schutzhülle entlang des Verfahrweges des Haltesystems einen Schlitz aufweist, durch den der Schellenfuß geführt ist. Bei einer Bewegung des Haltesystems wird der Schellenfuß durch den entlang des Verfahrwegs des Haltesystems ausgerichteten Schlitz geführt.

Die genaue Positionierung der Verschlusselemente gegenüber der Schutzhülle kann dadurch erreicht werden, dass die Schutzhülle entlang der Führungsstange einen rohrförmigen Abschnitt aufweist, dass die Schutzhülle an ihren Enden jeweils in einen im Durchmesser reduzierten Halteabschnitt übergeht und dass die Verschlusselemente an den Halteabschnitten insbesondere formschlüssig in Längsrichtung der Schutzhülle festgelegt sind. Die Leitungsschelle kann sich so in dem rohrförmigen Abschnitt bewegen. Die Verschlusselemente umgreifen die Schutzhülle in den Halteabschnitten, wobei ihre Positionen beispielsweise jeweils durch eine den Durchmesser der Schutzhülle reduzierende Verjüngungsstufe festgelegt sind.

Die Schutzhülle kann dadurch gegenüber dem Leitungs-Rückzugsystem ausgerichtet sein, dass die Halteelemente auf ihrer dem Roboterarm abgewandten Seite jeweils eine kehlförmig geformte Auflagefläche aufweisen, in welche eine Teilschale der Schutzhülle eingelegt ist. Die Schutzhülle kann dabei mit der Auflagefläche verbunden sein oder die Schutzhülle kann durch entsprechende Aufnahmen für die Verschlusselemente mittelbar oder unmittelbar mit dem Roboterarm verbunden sein.

Die Erfindung wird im Folgenden anhand der in den Zeichnungen dargestellten Ausführungsbeispiele näher erläutert. Es zeigen:
- Fig. 1: in perspektivischer Seitenansicht ein Leitungs-Rückzugsystem für eine Zuführungsanordnung eines Industrieroboters,
- Fig. 2: das Leitungs-Rückzugsystem gemäß Figur 1 mit einer Abdeckung,
- Fig. 3: das Leitungs-Rückzugsystem gemäß Figur 1 und 2 mit einer Schutzhülle,
- Fig. 4: in perspektivischer Seitenansicht ein flexibles Klemmstück und
- Fig. 5: einen Industrieroboter mit dem Leitungs-Rückzugsystem gemäß Figur 3.

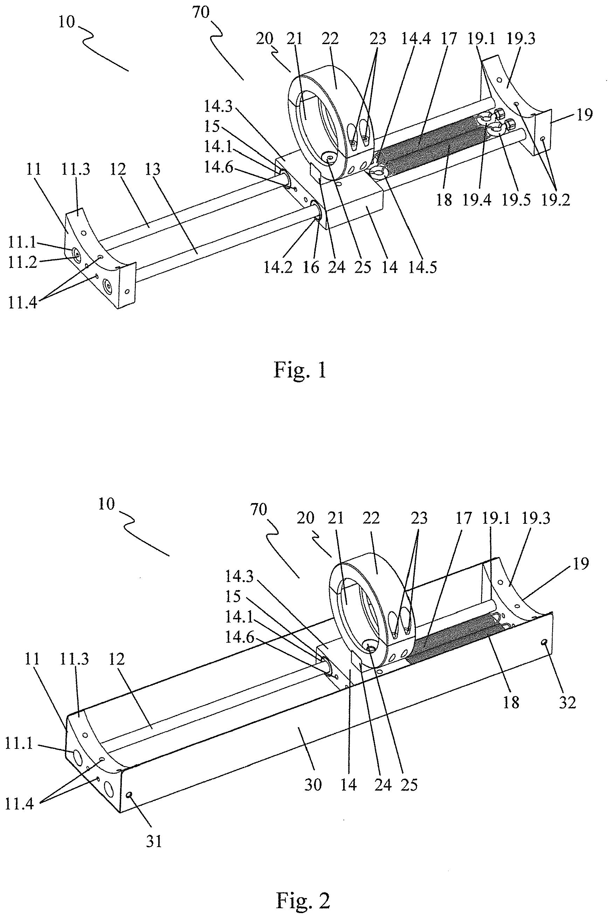

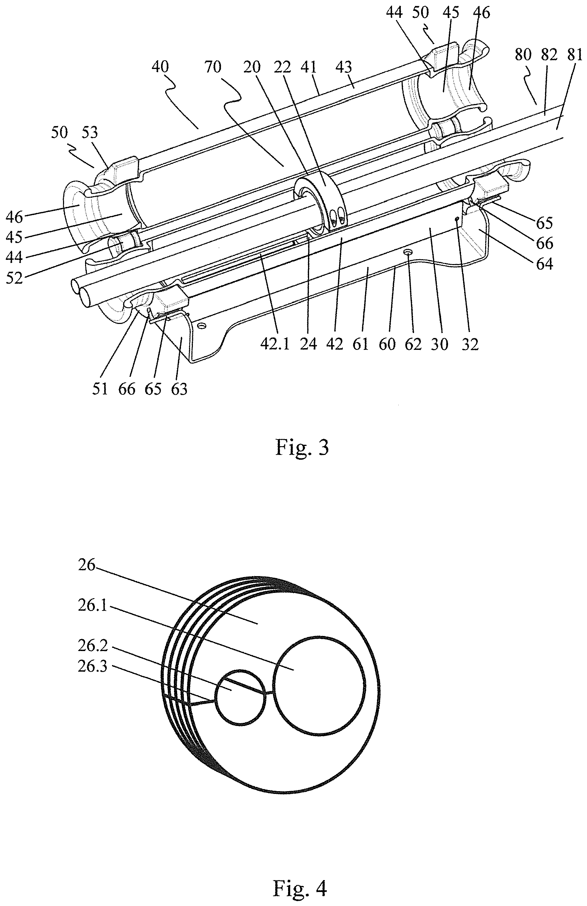

Figur 1 zeigt in perspektivischer Seitenansicht ein Leitungs-Rückzugsystem 10 für eine in den Figuren 3 und 4 gezeigte Zuführungsanordnung 80 eines Industrieroboters 90.

Dem Leitungs-Rückzugsystem 10 ist ein Haltesystem 70 zugeordnet. Dieses beinhaltet einen Schlitten 14, auf dessen oberer Montageebene 14.3 eine Leitungsschelle 20 montiert ist. Der Schlitten 14 und die Leitungsschelle 20 sind dazu über einen Schellenfuß 24 und eine Befestigungsschraube 25 miteinander verbunden. Die Leitungsschelle 20 selbst ist aus einer unteren Halbschale 21 und einer oberen Halbschale 22 aufgebaut, wobei die Halbschalen 21, 22 mittels Verbindungsschrauben 23 verschließbar sind. Der Schlitten 14 weist zwei Längsdurchbrüche 14.1, 14.2 in Form von zwei Bohrungen auf, in welche jeweils eine Gleitbuchse 15, 16 eingeführt ist. An dem Schlitten 14 sind Gewindebohrungen 14.6 zur Befestigung der Leitungsschelle 20 und zur Montage von Schraubösen 14.4, 14.5 vorgesehen.

Durch die Längsdurchbrüche 14.1, 14.2 und die Gleitbuchsen 15, 16 sind zwei parallel verlaufende Führungsstangen 12, 13 geführt, so dass das Haltesystem 70 gleitend auf den Führungsstangen 12, 13 gelagert ist. Die Führungsstangen 12, 13 sind dabei als Rundstäbe oder Rohre mit rundem Querschnitt ausgeführt. Endseitig sind die Führungsstangen 12, 13 in entsprechenden Stangenaufnahmen 11.1, 19.1 zweier Halteelemente 11, 19 gehalten.

Die Halteelemente 11, 19 sind als im Wesentlichen rechteckige, plattenförmige Bauteile ausgeführt, wobei eine obere Seitenfläche als kehlförmig nach innen gewölbte Auflagefläche 11.3, 19.3 ausgebildet ist. Die Flächen der Halteelemente 11, 19 sind in Richtung der Führungsstangen 12, 13 ausgerichtet. Als Stangenaufnahmen 11.1, 19.1 sind durchgängige Bohrungen vorgesehen, in welche die Führungsstangen 12, 13 eingeführt sind. Endseitig sind die Führungsstangen 12, 13 mit jeweils einer Schraube 11.2 mit den Halteelementen 11, 19 fest verbunden. An den Halteelementen 11, 19 sind Gewindebohrungen 11.4, 19.2 zur Montage weitere Bauteile des Leitungs-Rückzugsystems 10 vorgesehen.

An dem hinteren Halteelement 19 sind zwei weitere Schraubösen 19.4, 19.5 in die dafür vorgesehenen Gewindebohrungen 19.2 eingeschraubt. Die an dem Schlitten 10 montierten Schraubösen 14.4, 14.5 und die an dem hinteren Halteelement 19 montierten Schraubösen 19.4, 19.5 sind zwischen den Führungsstangen 17, 18 angeordnet und so ausgerichtet, dass sich jeweils zwei Schraubösen 14.4, 14.5, 19.4, 19.5 gegenüberstehen. Zwischen zwei gegenüberstehenden Schraubösen 14.4, 14.5, 19.4, 19.5 ist jeweils ein Rückstellelement 17, 18 in Form einer Zugfeder eingespannt.

Das Haltesystem 70 ist über den Schlitten 10 und die darin eingebrachten Gleitbuchsen 15, 16 gleitend auf den Führungsstangen 12, 13 gelagert. Ohne Einwirkung äußerer Kräfte wird das Haltesystem 70 von den beiden Rückstellelementen 17, 18 in eine Endposition auf Seiten des hinteren Halteelements 19 gezogen.

Die Halteelemente 11, 19 zeigen auf den den Auflageflächen 11.3, 19.3 gegenüberliegenden Seitenflächen eben ausgeführte Montageflächen, über welche sie mittelbar oder unmittelbar an einen Armabschnitt eines Industrieroboters 90 angebracht werden können. Die Halteelemente 11, 19 und die Führungsstangen 12, 13 sind somit ortsfest gegenüber dem Armabschnitt gehalten.

Die Leitungsschelle 20 kann mit den Verbindungsschrauben 23 geöffnet und wieder geschlossen werden. Wie in Figur 3 gezeigt, kann die Zuführungsanordnung 80 in die Leitungsschelle 20 eingeklemmt und somit kraftschlüssig mit dieser verbunden werden.

Wirkt über die Zuführungsanordnung 80 eine entlang der Führungsschienen 12, 13 in Richtung des vorderen Halteelements 11 gerichtete Zugkraft auf das Haltesystem 70, so wird dieses entgegen der Rückstellkraft der Rückstellelemente 17, 18 gleitend in Richtung des vorderen Halteelements 11 auf den Führungsstangen 12, 13 verschoben. Die Zuführungsanordnung 80 bleibt dabei entsprechend der Rückstellkraft der Rückstellelemente 17, 18 gespannt. Auf die zwischen den Gleitbuchsen 15, 16 und den Führungsstangen 12, 13 ausgebildeten Gleitebenen wirkt lediglich ein durch die Zugkraft der Zuführungsanordnung 80 und den Abstand der Mitte der Leitungsschelle 20 zu der durch die Führungsstangen 12, 13 gebildeten Ebene bewirktes Drehmoment. Da die Leitungsschelle 20 unmittelbar an den Schlitten angebracht ist, ist dieser Abstand sehr gering, so dass sich nur kleine Drehmomente ausbilden. Dies führt zum einen dazu, dass sich der Schlitten leicht auf den Führungsstangen 12, 13 bewegen lässt und nicht verklemmt und dass zum anderen insbesondere die Gleitbuchsen 15, 16 nur wenig verschleißen. Die Gleitbuchsen sind dabei vorteilhaft aus einem Kunststoff gefertigt. Ein weiterer Vorteil des gezeigte Leitungs-Rückzugsystems 10 ergibt sich daraus, dass das Haltesystem 70 als bewegliches Element lediglich in einem abgegrenzten Bereich zwischen den beiden Halteelementen 11, 19 verfahren wird. Dieser Bereich ist durch die beiden Führungsstangen 12, 13 freigehalten, so dass keine Hindernisse in dem Verfahrweg des Schlittens 14 montiert werden können.

Figur 2 zeigt das Leitungs-Rückzugsystem gemäß Figur 1 mit einer zusätzlich angebrachten Abdeckung 30, wobei aus Gründen der vereinfachten Darstellung die Schraubösen 19.4, 19.5 nicht gezeigt sind. Die Abdeckung 30 ist in dem gezeigten Ausführungsbeispiel als Blechbauteil ausgeführt, welches rinnenförmig um die gerade verlaufenden unteren und seitlichen Seitenflächen der Halteelemente 11, 19 geformt ist. Die Abdeckung 30 ist mit nicht dargestellten Schrauben, welche durch Bohrungen 31, 32 durch die Abdeckung 30 geführt und in Gewindebohrungen 11.4, 19.3 der Halteelemente 11, 19 eingeschraubt sind, mit den Haltelementen 11, 19 verbunden. Die Abdeckung 30 bildet so eine untere und seitliche Einhausung der Rückstellelemente 17, 18, der Führungsstangen 12, 13 und des darauf gelagerten Schlittens 14 entlang seines Verfahrwegs. Damit wird verhindert, dass Hindernisse von unten oder von der Seite in den Verfahrweg eingebracht werden können.

Figur 3 zeigt das Leitungs-Rückzugsystem gemäß Figur 1 und 2 mit einer angebrachten Schutzhülle 40, der Zuführungsanordnung 80, der Abdeckung 30 und einem Montageblech 60.

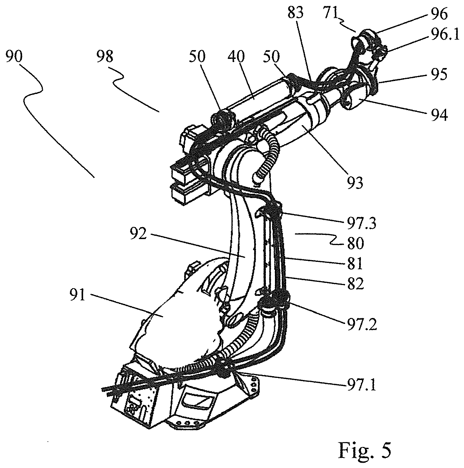

Das Montageblech 60 ist mit seiner Bodenplatte 61 an der Unterseite der Abdeckung 30 angeordnet. Stirnseitig ist das Montageblech 60 abgewinkelt, so dass sich die ausgebildeten Seitenwände 63, 64 um die äußeren Seitenflächen der Haltelemente 11, 19 legen. Die Seitenwände 63, 64 sind an ihren oberen Enden der Kontur der kehlförmigen Auflageflächen 11.3, 19.3 der Halteelemente 11, 19 angepasst. An den oberen Enden sind abgewinkelt Montagelaschen 65 angeformt, in welche Positionsstifte 66 eingebracht sind. In der Bodenplatte 61 sind Montagelöcher 62 zur Befestigung des Montageblechs 60 an einem in Figur 5 gezeigten Roboterarm 98 vorgesehen.

Die Schutzhülle 40 ist aus zwei Teilschalen 41, 42 gebildet. Dabei liegt eine untere Teilschale 42 auf den Auflageflächen 11.3, 19.3 der Halteelemente 11, 19 auf. Die Teilschalen 41, 42 sind von zwei Verschlusselementen 50 umfasst, welche jeweils aus einem Verschlussunterteil 51, einem Verschlussgelenk 52 und einem Verschlussoberteil 53 gebildet sind. Das Verschlussunterteil 51 umgreift die untere Teilschale 42, während das Verschlussoberteil 53 die obere Teilschale 41 umfasst. Durch die Verschlussgelenke 52 können die Verschlussoberteile 53 und damit die obere Teilschale 51 von den Verschlussunterteilen 51 und der unteren Teilschale 42 weggeklappt werden. Die Schutzhülle 40 lässt sich somit öffnen und wieder schließen. Die untere Teilschale 42 weist entlang des Verfahrwegs des Haltesystems 70 einen Schlitz 42.1 auf, durch den der Schellenfuß 24 geführt ist, so dass das Haltesystem 70 entlang der Führungsstangen 12, 13 verschoben werden kann.

Die Schutzhülle 40 selbst enthält entlang der Ausdehnung der Führungsstangen 12, 13 und somit im Bereich des Verfahrwegs des Haltesystems 70 einen rohrförmigen Abschnitt 43 gleichen Durchmessers. An den Enden des rohrförmigen Abschnitts 43 ist in dem gezeigten Ausführungsbeispiel der Durchmesser der Schutzhülle 40 durch jeweils eine Verjüngungsstufe 44 reduziert und geht in zwei Halteabschnitte 45 über. Endseitig ist die Schutzhülle 40 durch zwei Endabschnitte 46 mit sich leicht aufweitenden Durchmessern und einem Abschlusswulst abgeschlossen.

Die Verschlusselemente 50 sind an den Halteabschnitten 45 der Schutzhülle 40 angebracht. Dabei ist ihre Position durch die Verjüngungsstufen 44 formschlüssig in Längsrichtung der Schutzhülle 40 festgelegt. Die Verschlussunterteile 51 der Verschlusselemente 50 sind auf die Montagelaschen 65 des Montageblechs 60 gelegt und durch die Positionsstifte 66 gehalten. Die Schutzhülle 40 ist somit genau zu den Führungsstangen 12, 13 und dem Verfahrweg der Leitungsschelle 20 positioniert.

Die aus einem Zuführungsschlauch 81 und einer Zuführungsleitung 82 gebildete Zuführungsanordnung 80 ist durch die endseitigen Öffnungen der Schutzhülle 40 der Leitungsschelle 20 zugeführt und in dieser eingeklemmt.

Zur Montage des Leitungs-Rückzugsystems 10 wird der Schlitten 14 mit den Gleitbuchsen 15, 16 auf die Führungsstangen 12, 13 geschoben und die Stangen werden endseitig mit den Halteelementen 11, 19 verbunden. Die Rückstellelemente 17, 18 werden in die Schraubösen 14.4, 14.5, 19.4, 19.5 eingehängt und die Abdeckung 30 wird an die Halteelemente 11, 19 montiert. Zur Montage an dem Roboterarm 98 wird das Montageblech 60 an dem Roboterarm befestigt und anschließend mit der Abdeckung 30 und/oder den Haltelementen 11, 19 verbunden. Danach wird die Schutzhülle 40 mit den Verschlusselementen 50 aufgelegt und befestigt. Dazu werden beispielsweise die Verschlusselemente 50 mit dem Montageblech 60 oder die untere Teilschale 42 mit den Halteelementen 11, 19 unter Verwendung der vorgesehenen Gewindebohrungen 11.4, 19.2 verschraubt. Die Schutzhülle 40 wird geöffnet und die untere Halbschale 21 der Leitungsschelle 20 wird, beabstandet durch den Schellenfuß 24, mit Hilfe der Befestigungsschraube 25 durch den Schlitz 42.1 der unteren Teilschale 42 auf der Montageebene 14.3 des Schlittens 14 festgeschraubt. Dabei wird die Halbschale 21 so ausgerichtet, dass die Öffnung der Leitungsschelle 20 in Richtung des Verfahrwegs des Haltesystems 70 zeigt. Anschließend wird die Zuführungsanordnung 80 entlang der unteren Teilschale 42 der Schutzhülle 40 der unteren Halbschale 21 der Leitungsschelle 20 zugeführt. Die Leitungsschelle 20 wird geschlossen, indem ihre obere Halbschale 22 mit Hilfe der Verbindungsschrauben 23 auf die untere Halbschale 21 geschraubt wird, wobei die Zuführungsanordnung 80 eingeklemmt wird. Die Zuführungsanordnung 80 ist somit kraftschlüssig mit dem Haltesystem 70 verbunden. Abschließend wird die obere Teilschale 41 der Schutzhülle 40 auf die untere Teilschale 42 geklappt und die Schutzhülle 40 wird mit den Verschlusselementen 50 verschlossen, wobei eine Verschraubung vorgesehen sein kann.

Figur 4 zeigt in perspektivischer Seitenansicht ein flexibles Klemmstück 26 zur Halterung der Zuführungsanordnung 80 in der Leitungsschelle 20 des Haltesystems 70. Das Klemmstück 26 ist aus einem flexiblen, insbesondere gummiartigen Material als Rundscheibe gefertigt. In der gezeigten Ausführungsvariante sind eine Schlauchaufnahme 26.1 und eine Leitungsaufnahme 26.2 als die flachen Seitenflächen der Rundscheibe verbindende Bohrungen eingebracht. Das Klemmstück 26 ist einseitig durch eine Klemmfuge 26.3, welche vom Rand des Klemmstücks 26 durch die Leitungsaufnahme 26.2 zu der Schlauchaufnahme 26.1 verläuft, geschlitzt. Entlang der Klemmfuge 26.3 kann das Klemmstück 26 aufgeklappt und der in Figur 3 gezeigte Zuführungsschlauch 81 in die Schlauchaufnahme 26.1 und die Zuführungsleitung 26.2 in die Leitungsaufnahme 26.2 eingelegt werden. Das Klemmstück 26 kann anschließend wieder zugeklappt und in die Leitungsschelle 20 des Haltesystems 70 eingeklemmt werden. Die Bohrungen der Schlauchaufnahme 26.1 und der Leitungsaufnahme 26.2 sind dabei derart ausgelegt, dass der Zuführungsschlauch 81 und die Zuführungsleitung 82 bei geschlossener Leitungsschelle 20 von dem Klemmstück 26 eingeklemmt und damit kraftschlüssig mit dem Haltesystem 70 verbunden sind.

Figur 5 zeigt einen Industrieroboter 90 mit dem Leitungs-Rückzugsystem 10 gemäß Figur 3. Der Industrieroboter 90 ist aus einer Roboterbasis 91 und einem daran mit einem Gelenk verbundenen Roboterarm 98 aufgebaut. Der Roboterarm 98 ist in verschiedene, über Gelenke verbundene Armabschnitte aufgeteilt. An der Roboterbasis 91 ist zunächst ein Oberarm 92 angebracht, gefolgt von einem Unterarm 93 und einer Roboterhand 94. An der Roboterhand 94 ist ein Werkzeughalter 95 zur Aufnahme eines von dem Industrieroboter 90 bedienten Werkzeugs gehalten. Durch die zwischen den Armabschnitten angebrachten Gelenke kann der Roboterarm 98 das Werkzeug in alle Raumrichtungen bewegen.

Entlang des Roboterarms 98 ist die Zuführungsanordnung 80, bestehend aus einem Zuführungsschlauch 81 und einer Zuführungsleitung 82, durch Führungselemente 97.1, 97.2, 97.3 gehalten. In einer alternativen Ausführungsvariante kann es vorgesehen sein, dass Zuführungsleitungen 82 und Zuführungsschläuche 81 von einem Wellschlauch umhüllt als Schlauchpaket zusammengefasst und entlang des Roboterarms 98 gehalten sind. Im Bereich des Oberarms 93 ist die Zuführungsanordnung 80, wie in Figur 3 gezeigt, durch das an dem Oberarm 93 montierte Leitungs-Rückzugsystem 10 gehalten. Dabei ist das Leitungs-Rückzugsystem 10 so ausgerichtet, dass das vordere Halteelement 11 zu der Roboterhand 94 hin ausgerichtet ist.

An dem Werkzeughalter 95 ist ein Befestigungselement 96.1 angebracht, an der eine vordere Leitungsschelle 96 montiert ist. Das Befestigungselement 96.1 und die Leitungsschelle 96 bilden ein vorderes Haltesystem 71 für die Zuführungsanordnung 80, welche in der Leitungsschelle 96 festgeklemmt ist. Dabei kann das in Figur 4 beschriebene Klemmstück 26 zur Halterung der Zuführungsanordnung 80 in der vorderen Leitungsschelle 96 verwendet sein. Zwischen dem in den Figuren 1 bis 3 gezeigten Haltesystem 70 und dem vorderen Haltesystem 71 ist ein Spannbereich 83 der Zuführungsanordnung 80 ausgebildet.

Die Zuführungsanordnung 80 ist dazu ausgelegt, das Werkzeug mit der benötigen Energie, mit den benötigten Medien sowie den benötigten Materialien zu versorgen. Dazu weist die Zuführungsanordnung 80 entsprechende Zuführungsschläuche 81 und Zuführungsleitungen 82 auf, welche nicht dargestellt als Schlauchpaket mit einer äußeren Ummantelung versehen sein können.

Die Armabschnitte des Roboterarms 98 sind dazu ausgelegt, relativ zueinander Bewegungen auszuführen. Dadurch kann sich der Abstand zwischen den an dem Roboterarm 98 angebrachten Führungselementen 97.1, 97.2, 97.3 und Haltesystemen 70, 71 verändern. Vergrößert sich durch eine entsprechend Bewegung der Roboterhand 94 der Abstand zwischen dem vorderen Haltesystem 71 und dem Leitungs-Rückzugsystem 10, so wird von der Zuführungsanordnung 80 eine Zugkraft auf das Haltesystem 70 des Leitungs-Rückzugsystems 10 übertragen, wodurch dieses gegen die Rückstellkraft der Rückstellelemente 17, 18 auf den Führungsstangen 12, 13 verschoben wird. Die zusätzlich erforderliche Länge der Zuführungsanordnung 80 zwischen dem Oberarm 93 und der Roboterhand 94 wird so bereitgestellt. Dabei bleibt der Spannbereich 83 der Zuführungsanordnung 80 entsprechend der Rückstellkraft der Rückstellelemente 17, 18 gespannt. Wird der Abstand zwischen dem vorderen Haltesystem 71 und dem Leitungs-Rückzugsystem 10 wieder reduziert, wird das Haltesystem 70 von den Rückstellelementen 17, 18 zurückgezogen. Der Spannbereich 83 der Zuführungsanordnung 80 bleibt entsprechend weiterhin gespannt.

Das Leitungs-Rückzugsystem 10 ermöglicht so einen Längenausgleich der Zuführungsanordnung 80 zwischen zwei Armabschnitten eines Roboterarms 98. Dabei bleibt ein zwischen den Armabschnitten verlaufender Spannbereich 83 der Zuführungsanordnung 80 gespannt, so dass sich keine Schlaufen ausbilden, die sich am Roboterarm 98 oder an anderen Gegenständen verfangen können. Vorteilhaft werden keine beweglichen Teile des Leitungs-Rückzugsystems 10 über die durch die Halteelemente 11, 19 und die Schutzhülle 40 definierten Außenabmessungen des Leitungs-Rückzugsystems 10 hinaus bewegt, wodurch Kollisionen mit in den Verfahrweg eingebrachten Hindernissen vermieden werden können. Dadurch kann auch das Verletzungsrisiko bei Arbeiten an dem Industrieroboter 90 vermindert werden.

## Patentansprüche

1. Leitungs-Rückzugsystem (10) für einen Industrieroboter (90) zur Straffung zumindest einer entlang eines Roboterarms (98) geführten Zuführungsanordnung (80), insbesondere eines Zuführungsschlauchs (81) und/oder einer Zuführungsleitung (82) und/oder eines Leitungspaketes, zum Längenausgleich in Folge einer Bewegung des Roboterarms (98), mit wenigstens einer Führungsstange (12, 13) und einem oder mehreren Rückstellelementen (17, 18), wobei ein Haltesystem (70) gegen die Federkraft des Rückstellelements (17, 18) verstellbar ist, wobei das Haltesystem (70) zur Befestigung der Zuführungsanordnung (80) ausgebildet ist,
wobei dass das Haltesystem (70) einen Schlitten (14) aufweist, wobei der Schlitten (14) verstellbar auf der Führungsstange (12, 13) gelagert ist und wobei eine Leitungsschelle (20) auf dem Schlitten (14) gehalten ist und mit diesem das Haltesystem (70) bildet,
**dadurch gekennzeichnet, dass** die Leitungsschelle (20) entlang zumindest eines Teils ihres Verfahrweges zumindest teilweise von einer Schutzhülle (40) umfasst ist, dass die Schutzhülle (40) zwei gegeneinander öffenbare Teilschalen (41, 42) aufweist, dass die Leitungsschelle (20) über einen Schellenfuß (24) mit dem Schlitten (14) verbunden ist und dass die Schutzhülle (40) entlang des Verfahrweges des Haltesystems (70) einen Schlitz (42.1) aufweist, durch den der Schellenfuß (24) geführt ist.

2. Leitungs-Rückzugsystem (10) nach Anspruch 1,
**dadurch gekennzeichnet,**
**dass** das Leitungs-Rückzugsystem (10) ein vorderes Halteelement (11) und ein hinteres Halteelement (19) aufweist, welche unmittelbar oder mittelbar mit dem ersten Armabschnitt des Roboterarms (98) ortsfest verbindbar sind, dass die zumindest eine Führungsstange (12, 13) auf einer Seite mit dem vorderen Halteelement (11) und auf einer gegenüberliegenden Seite mit dem hinteren Halteelement (19) verbunden ist und dass der in Längsrichtung der Führungsstange (12, 13) bewegliche Schlitten (14) zwischen den Halteelementen (11, 19) gelagert ist.

3. Leitungs-Rückzugsystem (10) nach Anspruch 1 oder 2,
**dadurch gekennzeichnet,**
**dass** der Schlitten (14) zumindest einen Längsdurchbruch (14.1, 14.2) mit einer darin eingelassenen Gleitbuchse (15, 16) aufweist und dass die zumindest eine Führungsstange (12, 13) durch die Gleitbuchse (15, 16) geführt ist.

4. Leitungs-Rückzugsystem (10) nach Anspruch 2 oder 3,
**dadurch gekennzeichnet,**
**dass** an den Halteelementen (11, 19) eine Abdeckung (30) montiert ist, welche das Leitungs-Rückzugsystem (10) entlang der Führungsstange (12, 13) zum Roboterarm (98) hin und/oder seitlich zumindest bereichsweise einhaust.

5. Leitungs-Rückzugsystem (10) nach einem der Ansprüche 1 bis 4,
**dadurch gekennzeichnet,**
**dass** das Rückstellelement (17, 18) als Zug- oder Druckfeder ausgebildet ist und im Bereich zwischen zwei Führungsstangen (12, 13) angeordnet ist.

6. Leitungs-Rückzugsystem (10) nach einem der Ansprüche 1 bis 5,
**dadurch gekennzeichnet,**
**dass** die Teilschalen (41, 42) im Bereich einer Längsseite durch eine Scharnier- oder Gelenkverbindung miteinander gekoppelt sind und auf der der Scharnier- oder Gelenkverbindung gegenüberliegenden Längsseite durch einen Verschluss oder einen die Schutzhülle (40) umfassenden Verschluss verschließbar sind.

7. Leitungs-Rückzugsystem (10) nach Anspruch 6,
**dadurch gekennzeichnet,**
**dass** die Schutzhülle (40) über zumindest ein die Teilschalen (41, 42) in einem Halteabschnitt (45) umfassendes Verschlusselement (50) verschließbar ist, wobei das Verschlusselement (50) die Scharnier- oder Gelenkverbindung und den Verschluss bildet.

8. Leitungs-Rückzugsystem (10) nach einem der Ansprüche 1 bis 7,
**dadurch gekennzeichnet,**
**dass** die Schutzhülle (40) entlang der Führungsstange (12, 13) einen rohrförmigen Abschnitt (43) aufweist, dass die Schutzhülle (40) an ihren Enden jeweils in einen im Durchmesser reduzierten Halteabschnitt (45) übergeht und dass die Verschlusselemente (50) an den Halteabschnitten (45) insbesondere formschlüssig in Längsrichtung der Schutzhülle (40) festgelegt sind.

9. Leitungs-Rückzugsystem (10) nach einem der Ansprüche 1 bis 8,
**dadurch gekennzeichnet,**
**dass** die Halteelemente (11, 19) auf ihrer dem Roboterarm (98) abgewandten Seite jeweils eine kehlförmig geformte Auflagefläche (11.3, 19.3) aufweisen, in welche eine Teilschale (41, 42) der Schutzhülle (40) eingelegt ist.

## Claims

1. A line retraction system (10) for an industrial robot (90) for tightening at least one supply assembly (80) guided along a robot arm (98), in particular a supply hose (81) and/or a supply line (82) and/or a line package, for length compensation as a result of a movement of the robot arm (98), having at least one guide rod (12, 13) and one or more return elements (17, 18), wherein a holding system (70) is adjustable against the spring force of the return element (17, 18), wherein the holding system (70) is designed for fastening the supply assembly (80),
wherein the holding system (70) has a carriage (14), wherein the carriage (14) is adjustably mounted on the guide rod (12, 13) and wherein a line clamp (20) is held on the carriage (14) and therewith forms the holding system (70),
**characterised in that** the line clamp (20) is at least partially enveloped by a protective casing (40) along at least part of the travel path thereof, that the protective casing (40) has two partial shells (41, 42) that can be opened against each other, that the line clamp (20) is connected to the carriage (14) via a clamp foot (24) and that the protective casing (40) has a slot (42.1) along the travel path of the holding system (70), through which the clamp foot (24) is guided.

2. The line retraction system (10) according to claim 1,
**characterised in that**
the line retraction system (10) has a front holding element (11) and a rear holding element (19), which can be connected directly or indirectly to the first arm section of the robot arm (98) in a stationary manner, that the at least one guide rod (12, 13) is connected on one side to the front holding element (11) and on an opposite side to the rear holding element (19) and that the carriage (14) which is movable in the longitudinal direction of the guide rod (12, 13) is mounted between the holding elements (11, 19).

3. The line retraction system (10) according to claim 1 or 2,
**characterised in that**
the carriage (14) comprises at least one longitudinal passage (14.1, 14.2) having a slide bushing (15, 16) embedded therein and that the at least one guide rod (12, 13) is guided through the slide bushing (15, 16).

4. The line retraction system (10) according to claim 2 or 3,
**characterised in that**
a cover (30) is mounted on the holding elements (11, 19), which encloses the line retraction system (10) along the guide rod (12, 13) to the robot arm (98) and/or laterally at least in regions.

5. The line retraction system (10) according to any one of claims 1 to 4,
**characterised in that**
the return element (17, 18) is designed as a tension or compression spring and is arranged in the region between two guide rods (12, 13).

6. The line retraction system (10) according to any one of claims 1 to 5,
**characterised in that**
the partial shells (41, 42) are coupled to one another in the region of a longitudinal side by a hinge or joint connection and can be closed on the longitudinal side opposite the hinge or joint connection by a closure or a closure comprising the protective casing (40).

7. The line retraction system (10) according to claim 6,
**characterised in that**
the protective casing (40) can be closed by means of at least one closure element (50) comprising the partial shells (41, 42) in a holding section (45), wherein the closure element (50) forms the hinge or joint connection and the closure.

8. The line retraction system (10) according to any one of claims 1 to 7,
**characterised in that**
the protective casing (40) has a tubular section (43) along the guide rod (12, 13), that the protective casing (40) merges at the ends thereof into a holding section (45) having a reduced diameter and that the closure elements (50) are fixed, in particular interlockingly, to the holding sections (45) in the longitudinal direction of the protective casing (40).

9. The line retraction system (10) according to any one of claims 1 to 8,
**characterised in that**
the holding elements (11, 19) on the side thereof facing away from the robot arm (98) each have a valley-shaped support surface (11.3, 19.3), in which a partial shell (41, 42) of the protective casing (40) is inserted.

## Revendications

1. Système de retour de conduite (10) pour un robot industriel (90) pour resserrer au moins un agencement d'alimentation (80) guidé le long d'un bras de robot (98), en particulier un tuyau d'alimentation (81) et/ou une conduite d'alimentation (82) et/ou un ensemble de conduites, pour compenser la longueur à la suite d'un mouvement du bras de robot (98), comprenant au moins une tige de guidage (12, 13) et un ou plusieurs éléments de rappel (17, 18), un système de maintien (70) étant réglable contre la force de ressort de l'élément de rappel (17, 18), ledit système de maintien (70) étant conçu pour fixer l'agencement d'alimentation (80),
ledit système de maintien (70) comportant une glissière (14), la glissière (14) étant montée de manière réglable sur la tige de guidage (12, 13), et un collier de serrage pour conduites (20) étant maintenu sur la glissière (14) et formant avec elle ledit système de maintien (70), **caractérisé en ce que** le collier de serrage pour conduites (20), le long d'au moins une partie de son parcours de déplacement, est entouré au moins partiellement par une gaine de protection (40), **en ce que** la gaine de protection (40) comporte deux coques partielles (41, 42) pouvant être ouvertes l'une par rapport à l'autre, **en ce que** le collier de serrage pour conduites (20) est raccordé à la glissière (14) à l'aide d'un pied de collier de serrage (24) et **en ce que** la gaine de protection (40) comporte, le long du parcours de déplacement du système de maintien (70), une fente (42.1) au moyen de laquelle le pied de collier de serrage (24) est guidé.

2. Système de retour de conduite (10) selon la revendication 1,
**caractérisé en ce**
**que** le système de retour de conduite (10) comporte un élément de maintien (11) avant et un élément de maintien (19) arrière, lesquels peuvent être raccordés de manière stationnaire, directement ou indirectement, à une première section de bras du bras de robot (98), **en ce que** l'au moins une tige de guidage (12, 13) est raccordée d'un côté à l'élément de maintien (11) avant et du côté opposé à l'élément de maintien (19) arrière et **en ce que** la glissière (14) mobile dans le sens longitudinal de la tige de guidage (12, 13) est montée entre les éléments de maintien (11, 19).

3. Système de retour de conduite (10) selon la revendication 1 ou 2,
**caractérisé en ce**
**que** la glissière (14) comporte au moins une ouverture longitudinale (14.1, 14.2) dotée d'une douille de glissement (15, 16) insérée à l'intérieur et **en ce que** l'au moins une tige de guidage (12, 13) est guidée au moyen de la douille de glissement (15, 16).

4. Système de retour de conduite (10) selon la revendication 2 ou 3,
**caractérisé en ce**
**que**, sur les éléments de maintien (11, 19), un couvercle (30) est monté, lequel enferme le système de retour de conduite (10) le long de la tige de guidage (12, 13) jusqu'au bras de robot (98) et/ou latéralement au moins par zones.

5. Système de retour de conduite (10) selon l'une quelconque des revendications 1 à 4,
**caractérisé en ce**
**que** l'élément de rappel (17, 18) est conçu sous la forme d'un ressort de traction ou de compression et disposé dans la zone entre deux tiges de guidage (12, 13).

6. Système de retour de conduite (10) selon l'une quelconque des revendications 1 à 5,
**caractérisé en ce**
**que** les coques partielles (41, 42) sont couplées les unes aux autres dans la zone d'un côté long au moyen d'un raccord à charnière ou articulé et peuvent être fermées du côté long opposé au raccord à charnière ou articulé au moyen d'une fermeture ou d'une fermeture comprenant la gaine de protection (40).

7. Système de retour de conduite (10) selon la revendication 6,
**caractérisé en ce**
**que** la gaine de protection (40) peut être fermée au moyen d'au moins un élément de fermeture (50) comprenant les coques partielles (41, 42) dans une section de maintien (45), dans lequel l'élément de fermeture (50) forme le raccord à charnière ou articulé et la fermeture.

8. Système de retour de conduite (10) selon l'une quelconque des revendications 1 à 7,
**caractérisé en ce**
**que** la gaine de protection (40) comporte le long de la tige de guidage (12, 13) une section tubulaire (43), **en ce que** la gaine de protection (40) se prolonge, à ses extrémités, respectivement dans une section de maintien (45) de diamètre réduit et **en ce que** les éléments de fermeture (50), au niveau de sections de maintien (45), sont fixés en particulier par liaison par complémentarité de forme dans le sens longitudinal de la gaine de protection (40).

9. Système de retour de conduite (10) selon l'une quelconque des revendications 1 à 8,
**caractérisé en ce**
**que** les éléments de maintien (11, 19), sur leur côté opposé au bras de robot (98), comportent respectivement une surface de support (11.3, 19.3) en forme de gorge, dans laquelle une coque partielle (41, 42) de la gaine de protection (40) est insérée.
